# EUROPÄISCHE PATENTSCHRIFT

(11) **EP 2 963 167 B1**
(45) Veröffentlichungstag und Bekanntmachung des Hinweises auf die Patenterteilung: **08.05.2019**
(21) Anmeldenummer: 14175092.7
(22) Anmeldetag: 30.06.2014
(51) Int. Cl.: D04H 1/4266, D04H 1/4374, D04H 1/542, D04H 1/72, E04B 1/76

(54) **Verfahren zur Herstellung von Faservliesmatten, insbesondere Dämmstoffmatten, sowie die nach diesem Verfahren erhältlichen Faservliesmatten**
Method for the preparation of fibre non-woven mats, in particular insulating material mats, and fibre non-woven mats obtained by this method
Procédé de fabrication de nattes en non tissé, notamment des nattes isolantes et nattes en non tissé obtenues selon ce procédé

(43) Veröffentlichungstag der Anmeldung: 06.01.2016
(73) Patentinhaber: NAPORO Klima Dämmstoff GmbH, 4320 Perg (AT)
(72) Erfinder: Schwemmer, Robert, 84367 Reut (DE); Mükisch, Herbert, 3072 Kasten (AT)
(74) Vertreter: Metten, Karl-Heinz

(56) Entgegenhaltungen:
- EP-A2- 1 932 643
- EP-A2- 2 036 691
- WO-A1-98/14313
- WO-A1-2013/127733
- DE-A1- 4 223 614
- DE-A1- 19 630 828
- DE-A1- 19 744 988
- DE-T2- 69 011 340
- DE-U1- 20 215 951

## Beschreibung

Die vorliegende Erfindung betrifft ein Verfahren zur Herstellung von Dämmstoffmatten sowie die nach diesem Verfahren erhältlichen Dämmstoffmatten.

Die Wärmedämmung von Außenfassaden gewinnt vor dem Hintergrund knapper werdender Ressourcen und steigender Energiekosten zunehmend an Bedeutung. Zu diesem Zweck werden sowohl Dämmplatten auf Basis geschäumter Kunststoffe, beispielsweise sogenannte EPS-Dämmplatten, als auch Dämmplatten auf der Basis von Naturfasern, beispielsweise Hanffaserdämmplatten, eingesetzt. Um aus geeigneten Pflanzenmaterialien Naturfasern für Dämmstoffmatten zu gewinnen, werden diese in Nass- oder Trockenverfahren aufgeschlossen und von Schäben befreit. Bei Schäben handelt es sich um die holzartigen Bestandteile des Pflanzenmaterials. Schäben erschweren den Verarbeitungsprozess von Pflanzenmaterialien zu Dämmstoffmatten regelmäßig nachhaltig. Dieses kann insbesondere auch auf überlange Faser zutreffen. Schäben sowie insbesondere Fasern verfügen über eine hohe Zugfestigkeit und beschädigen daher insbesondere die rotierenden Elemente von Verarbeitungsanlagen. Auch können Schäben zu Verstopfungen der Zuführleitungen der Produktionsanlagen führen. Aus diesem Grunde werden vor der Weiterverwendung der zerkleinerten Pflanzenmaterialien für die Vliesherstellung die Pflanzenschäben regelmäßig vom Fasermaterial abgetrennt. Die aus dem Stand der Technik bekannten Verfahren zur Isolierung von Pflanzenfasern sind jedoch in der Regel energetisch sehr aufwendig und daher kostentreibend. Aus diesem Grunde hat es nicht an Versuchen gefehlt, Pflanzenmaterial enthaltend Fasern und Schäben für die Herstellung von Dämmfasermatten zu verwenden. Exemplarisch sei auf die DE 197 56 046 verwiesen, gemäß der frisch geerntete Hanfpflanzen durch ein Silieren aufzuschließen und durch anschließende Schub- und Scherbeanspruchung zu zerfasern sind. Die derart aufbereiteten Hanffasermaterialien sollen sich mit den darin verbliebenen Schäben unter Einsatz geeigneter Bindemittel zu Dämmplatten verarbeiten lassen. Gemäß der AT 409 974 sind die gemäß der DE 197 56 046 erhaltenen Produkte jedoch nur bedingt als Wärmedämmplatten einsetzbar. Daher schlägt die AT 409 974 vor, zunächst Fasern und Schäben zu trennen, um anschließend die abgetrennten Hanfschäben gezielt einem Fasergemisch aus Naturfasern und Bindefasern zuzugeben. Eine derartige Vorgehensweise löst das Problem der energie- und kostenintensiven Fertigung von Dämmplatten aus nachwachsenden Rohstoffen nicht.

Aus der DE 875 137 ist ebenfalls ein Verfahren zu Herstellung von Faserplatten bekannt, das die gesamte Nutz- bzw. Kulturpflanze verwendet. Diese sind in einer geeigneten Mahleinrichtung zusammen mit Wasser bis zur Verfilzungsfähigkeit zu zerfasern. Aus dem Faserbrei ist durch Absetzen auf einer durchlässigen Unterlage durch Absaugen oder Abpressen eine Platte zu bilden, die in Folgeschritten weiter verdichtet und mit Imprägnier- und Bindemitteln versehen werden kann. Auch dieses Verfahren ist sehr aufwendig und erfordert kostenintensive Trocknungsschritte.

In der DE 196 40 622 A1 wird beschrieben, Schäben für die Herstellung von Baustoffen zu verwenden, welche Bastfasern und Bindemittel enthalten. Auf diese Weise sollen sich Schäben, die vormals als Abfall angesehen wurden, noch einer wirtschaftlichen Nutzung zuführen lassen. Die mit der Verwendung von Schäben regelmäßig einhergehenden Probleme werden in diesem Dokument jedoch nicht angesprochen.

Gemäß der DE 196 30 828 A1 werden kompostierbare Faservliese, die auch als Dämmstoffe verwendet werden können, dadurch erhalten, dass man als Bindemittel wenigstens ein biologisch abbaubares, im Grundgerüst Ester- und/oder Etherverbindungen enthaltendes Polymer verwendet. Auch hier werden die Probleme, die mit der Verwendung von Schäben bei der Herstellung von Dämmstoffmatten auftreten, nicht thematisiert.

Eine Dämmstoffmatte mit hoher Dämmwirkung soll gemäß der DE 198 46 104 A1 dadurch zugänglich sein, dass die Dämmstoffmatte beidseitig durch Kaschierungen eingefasst ist und zwischen diesen Kaschierungen sogenannte volumengebende Abstandshalter aus im Wesentlichen ungerösteten Hanffaserprodukten vorliegen. Auch diese Druckschrift lässt sich nicht aus zu den Problemen, die bei der Mitverwendung von Schäben bei der Herstellung von Dämmstoffmatten beobachtet werden.

In der WO 98/14313 A1 wurde gefunden, dass geeignete Baustoffe auch durch Zumischung von Schäben zu Bastfasern und Bindemittel erhältlich sind, wobei ein lockeres Gefüge aus Schäden und Fasern an den Berührungspunkten durch das Bindemittel fixiert sein kann.

Die WO 2013/127733 A1 befasst sich mit einem Verfahren zur Herstellung eines mattenförmigen Halbzeugs aus Naturfasern, bei dem nicht entholzte Flachspflanzen unbehandelt zu einem dosierfähigen Ganzpflanzenrohstoff mechanisch aufbereitet und anschließend auf einer Vliesanlage zu dem mattenförmigen Halbzeug verarbeitet werden.

Die DE 202 15 951 U1 stellt ab auf Dämmstoffmatten, die unter Verwendung eines Wirrfaservlieses aus zu Stapelfasern geschnittenen und mit Bindefasern gemischten Naturfasern unter Druck- und Wärmezufuhr zu einer gebundenen Matte verdichtet sind, wobei dem Fasergemisch Hanfschäben zuzumischen sind. Diese Dämmstoffplatten sollen sich durch eine gute Tragfähigkeit auszeichnen und keine Einbußen bei den Schalldämmeigenschaften zeigen.

In der EP 1 932 643 wird ein Verfahren zur Herstellung eines verleimbaren Werkstoffes für die Plattenindustrie aus Faserpflanzen offenbart, umfassend das Kürzen der Faserpflanzen auf eine Länge im Bereich von 2 bis 30 cm, das Aufarbeiten der Faserpflanzen, um Fasern und holzige Anteile teilweise voneinander zu lösen, und das Trocknen der Faserpflanzen, so dass der gebildete Werkstoff Stängelstücke umfasst, welche Fasern und holzige Anteile der Faserpflanzen enthalten, wobei Fasern und holzige Anteile im Wesentlichen in ihrem natürlichen Verbund zu verbleiben haben. Mit diesem Verfahren sollen eigenstabile Werkstoffplatten kostengünstig zugänglich sein, die ohne den Einsatz von synthetischen Binde- oder Stützfasern auskommen.

Bei der Fertigung von Dämmplatten aus nachwachsenden Rohstoffen darf nicht unberücksichtigt bleiben, dass diese in Konkurrenz zu geschäumten Dämmplatten aus Kunststoffmaterialien stehen. Letztere verfügen regelmäßig über gute Dämmeigenschaften, welche sich aufgrund der Homogenität des Materials über die gesamte Dämmfläche einstellen. Hingegen kann es mitunter schwierig sein, bei zum Beispiel Dämmplatten aus Hanfpflanzen, welche Schäben enthalten, eine hinreichend homogene Materialverteilung innerhalb der Dämmmatte zu erzielen. Dieses ist einer hinreichenden Wärmedämmung ebenso abträglich wie einer für die Dämmplatten geforderten Stabilität. Zwar kann die Stabilität einer solchen Dämmplatte durch stärkeres Verfestigen und den Einsatz einer größeren Menge an Bindemitteln erhöht werden, hierdurch verschlechtern sich jedoch regelmäßig die Wärmedämmeigenschaften.

Es wäre folglich wünschenswert, auf ein Verfahren für die Herstellung von Dämmstoffmatten aus nachwachsenden Rohstoffen zurückgreifen zu können, das nicht mit den Mängeln des Stands der Technik behaftet ist. Der vorliegenden Erfindung lag daher die Aufgabe zu Grunde, ein Verfahren zur Verfügung zu stellen, mit dem auf zuverlässige Weise Dämmstoffmatten aus nachwachsenden Rohstoffen auch bei Mitverwendung von Schäben erhalten werden können, die sich durch eine homogene Verteilung der die Dämmstoffmatte bildenden Bestandteile, gute Wärmedämmeigenschaften, die vergleichbar sind mit denen geschäumter Kunststoff Dämmplatten, und eine gleichzeitig gute Stabilität bzw. mechanische Festigkeit auszeichnen.

Demgemäß wurde ein Verfahren zur Herstellung von Dämmstoffmatten gemäß den Merkmalen des Patentanspruchs 1 gefunden. Das erfindungsgemäße Verfahren umfasst demgemäß die folgenden Schritte:
a) die Zurverfügungstellung von erstem zerkleinerten Pflanzenmaterial enthaltend Pflanzenfasern und Schäben, wobei die Pflanzenfasern und Schäben zumindest in Teilen miteinander verbunden sind,
b) Zurverfügungstellung mindestens eines Bindemittels, insbesondere Bindefaser,
d) Herstellung einer ersten Materiallage aus dem ersten zerkleinerten Pflanzenmaterial enthaltend Pflanzenfasern und Schäben in einer ersten Zuführvorrichtung,
g) Vermischen des ersten zerkleinerten Pflanzenmaterials enthaltend Pflanzenfasern und Schäben mit dem mindestens einem Bindemittel, insbesondere der mindestens einen Bindefaser, insbesondere im Luftstrom,
h) gegebenenfalls Abscheiden von Staub- und/oder Fremdteilchen aus der nach Schritt g) erhaltenen Mischung,
i) gegebenenfalls Zwischenlagerung der nach Schritt g) bzw. h) erhaltenen Mischung,
j) Austragung der Mischung auf ein Förderband unter Ausbildung eines Faserflors,
l) Bilden eines Vorvlieses mittels mindestens eines ersten Vliesbildners, insbesondere ausgestattet mit Nadeln oder Stiften, und/oder mittels mindestens eines Vliesstreuers, insbesondere umfassend oder bestehend aus mindestens einer Stiftwalze, wobei die Mischung vorzugsweise vermittels einer ersten Transporteinheit dem Vliesbildner oder Vliesstreuer zugeführt wird,
n) gegebenenfalls zusätzlich zu Schritt g) Beaufschlagen des Vorvlieses, insbesondere Bestreuen des Vorvlieses, mit mindestens einem partikulären Bindemittel,
o) Bilden eines Vlieses aus dem Vorvlies gemäß Schritt l) oder n) mittels eines zweiten Vliesbildners, enthaltend einen Tambour, insbesondere ausgestattet mit einem Sägezahndraht, wobei das Vorvlies vermittels einer zweiten Transporteinheit, enthaltend mindestens ein Walzenpaar aus Ober- und Unterwalze oder enthaltend eine Oberwalze und einen Zuführtisch, dem Tambour zugeführt wird,
r) Aktivieren des Bindemittels, insbesondere Behandeln des gemäß Schritt o) erhaltenen Vlieses mit Wärme zwecks Thermobonding des Bindemittels, und gleichzeitiges oder zeitlich versetztes Beaufschlagen des Vlieses mit Druck und
u) Vereinzeln des verfestigten Vlieses zu Dämmstoffmatten, wobei die Dämmstoffmatten eine Dichte im Bereich von 20 bis 120 km/m³ aufweisen.

Ferner wird die der Erfindung zugrunde liegende Aufgabe gelöst durch ein Verfahren zur Herstellung von Dämmstoffmatten, umfassend
a) die Zurverfügungstellung von erstem zerkleinerten Pflanzenmaterial enthaltend Pflanzenfasern und Schäben, wobei die Pflanzenfasern und Schäben zumindest in Teilen miteinander verbunden sind,
b) Zurverfügungstellung mindestens eines Bindemittels, insbesondere Bindefaser,
d) Herstellung einer ersten Materiallage aus dem ersten zerkleinerten Pflanzenmaterial enthaltend Pflanzenfasern und Schäben in einer ersten Zuführvorrichtung,
g) Vermischen des ersten zerkleinerten Pflanzenmaterials enthaltend Pflanzenfasern und Schäben mit dem mindestens einem Bindemittel, insbesondere der mindestens einen Bindefaser, insbesondere im Luftstrom,
h) gegebenenfalls Abscheiden von Staub- und/oder Fremdteilchen aus der nach Schritt g) erhaltenen Mischung,
i) gegebenenfalls Zwischenlagerung der nach Schritt g) bzw. h) erhaltenen Mischung,
j) Austragung der Mischung auf ein Förderband unter Ausbildung eines Faserflors,
l) Bilden eines Vorvlieses mittels mindestens eines ersten Vliesbildners, insbesondere ausgestattet mit Nadeln oder Stiften, und/oder mittels mindestens eines Vliesstreuers, insbesondere umfassend oder bestehend aus mindestens einer Stiftwalze, wobei die Mischung vorzugsweise vermittels einer ersten Transporteinheit dem Vliesbildner oder Vliesstreuer zugeführt wird,
n) gegebenenfalls zusätzlich zu Schritt g) Beaufschlagen des Vorvlieses, insbesondere Bestreuen des Vorvlieses, mit mindestens einem partikulären Bindemittel,
o) Bilden eines Vlieses aus dem Vorvlies gemäß Schritt l) oder n) mittels eines zweiten Vliesbildners, enthaltend einen Tambour, ausgestattet mit einem Sägezahndraht, wobei das Vorvlies vermittels einer zweiten Transporteinheit, enthaltend mindestens ein Walzenpaar aus Ober- und Unterwalze oder enthaltend eine Oberwalze und einen Zuführtisch, dem Tambour zugeführt wird,
r) Aktivieren des Bindemittels, insbesondere Behandeln des gemäß Schritt o) erhaltenen Vlieses mit Wärme zwecks Thermobonding des Bindemittels, und gleichzeitiges oder zeitlich versetztes Beaufschlagen des Vlieses mit Druck und
u) Vereinzeln des verfestigten Vlieses zu Dämmstoffmatten,
   In einer weiteren Ausführungsform umfasst das erfindungsgemäße Verfahren ferner die Schritte:
c) Zurverfügungstellung von zweitem zerkleinerten Pflanzenmaterial enthaltend Pflanzenfasern, das einen reduzierten Anteil an Schäben aufweist oder im Wesentlichen frei von Schäben ist, und/oder das sich in einer anderen Eigenschaft als dem Schäbenanteil von dem ersten zerkleinerten Pflanzenmaterial unterscheidet,
e) Herstellung mindestens einer weiteren, zweiten Materiallage aus dem zweiten zerkleinerten Pflanzenmaterial enthaltend Pflanzenfasern, das einen reduzierten Anteil an Schäben aufweist oder im Wesentlichen frei von Schäben ist, und/oder aus einem zweiten zerkleinerten Pflanzenmaterial, das sich in einer anderen Eigenschaft als dem Schäbenanteil von dem ersten zerkleinerten Pflanzenmaterial unterscheidet, in einer weiteren, zweiten Zuführvorrichtung,
f) Versetzten der zweiten Materiallage mit mindestens einem Flammschutzmittel, insbesondere Beaufschlagen der Materiallage von der Oberseite mit einem wässrigen System, enthaltend mindestens ein Flammschutzmittel, und
g) Vermischen des ersten zerkleinerten Pflanzenmaterials enthaltend Pflanzenfasern und Schäben mit dem mindestens einen Bindemittel und mit dem zweiten zerkleinerten Pflanzenmaterial enthaltend Pflanzenfasern, das einen reduzierten Anteil an Schäben aufweist oder im Wesentlichen frei von Schäben ist und/oder das sich in einer anderen Eigenschaft als dem Schäbenanteil von dem ersten zerkleinerten Pflanzenmaterial unterscheidet.

Hierbei kann vorgesehen sein, dass in Schritt g) das erste zerkleinerte Pflanzenmaterial enthaltend Pflanzenfasern und Schäben mit dem mindestens einen Bindemittel in Form von Bindefasern und mit dem zweiten zerkleinerten Pflanzenmaterial enthaltend Pflanzenfasern, das einen reduzierten Anteil an Schäben aufweist oder im Wesentlichen frei von Schäben ist und/oder das sich in einer anderen Eigenschaft als dem Schäbenanteil von dem ersten zerkleinerten Pflanzenmaterial unterscheidet im Luftstrom vermischt werden.

In einer weiteren Ausführungsform umfasst das erfindungsgemäße Verfahren überdies ferner die Schritte
q) Beaufschlagen des Vlieses mit Wasserdampf, insbesondere wenn in Schritt n) ein partikuläres Bindemittel, vorzugsweise in Pulverform, zugegeben wird, und/oder
r) Aktivieren des Bindemittels durch Behandeln des gemäß Schritt o), p) oder q) erhaltenen Vlieses mit Wärme zwecks Thermobonding des Bindemittels, insbesondere der Bindefasern, und gleichzeitiges oder zeitlich versetztes Beaufschlagen des Vlieses mit Druck,
s) gegebenenfalls Kalandrieren des gemäß Schritt q) oder r) erhaltenen Vlieses und
t) sofern in Schritt q), r) und/oder s) eine Wärmebehandlung stattgefunden hat, Abkühlen des gemäß Schritt q, r) und/oder s) verfestigten Vlieses und gegebenenfalls Beaufschlagen mit Druck.

Der erste Vliesbildner ist vorzugsweise ein aerodynamischer Vliesbildner, enthaltend mindestens eine Nadelwalze oder einen Tambour. Alternativ oder zusätzlich kann für den zweiten Vliesbildner ein aerodynamischer Vliesbildner, enthaltend mindestens einen Tambour, eingesetzt werden.

Das partikuläre Bindemittel kann zum Beispiel in Form von Pulver, Granulat oder Fasern oder einer beliebigen Mischung hiervon vorliegen.

In einer Ausführungsform des erfindungsgemäßen Verfahrens kann das Abscheiden von Staub- und/oder Fremdteilchen aus der nach Schritt g) erhaltenen Mischung mittels mindestens eines Zyklonabscheiders und/oder Kondensers, insbesondere Zellenradkondensers, vorgenommen werden.

In einer weiteren Ausführungsform des erfindungsgemäßen Verfahrens kann die erste Transporteinheit mindestens ein Walzenpaar aus Ober- und Unterwalze enthalten. Gemäß einer vorteilhaften Ausgestaltung des erfindungsgemäßen Verfahrens kann vorgesehen sein, dass das zweite zerkleinerte Pflanzenmaterial, insbesondere Hanfpflanzenmaterial, auf Ausgangspflanzenmaterial mit einem höheren Röstgrad als das Ausgangspflanzenmaterial für das erste zerkleinerte Pflanzenmaterial basiert und/oder dass die durchschnittliche, insbesondere die absolute, Länge der Fasern des zweiten zerkleinerten Pflan-zenmaterials, insbesondere Hanfpflanzenmaterials, kürzer ist als die durchschnittliche, insbesondere absolute, Länge der Fasern des ersten zerkleinerten Pflanzenmaterials und/oder dass das zweite zerkleinerte Pflanzenmaterial, insbesondere Hanfpflanzenmaterial, einen geringeren Anteil an Schäben als das erste zerkleinerte Pflanzenmaterial aufweist. Ein von Schäben befreites zerkleinertes Pflanzenmaterial kann regelmäßig noch stets einen Schäbenanteil im Bereich von o bis 10 Gew.-%, bezogen auf eine dieses zerkleinerte Pflanzenmaterial, enthalten.

Durch die Mitverwendung von zweitem zerkleinerten Pflanzenmaterial enthaltend Pflanzenfasern, das einen reduzierten Anteil an Schäben aufweist, insbesondere im Wesentlichen frei von Schäben ist, und das insbesondere eine durchschnittliche, insbesondere die absolute, Länge aufweist, die kürzer ist als die durchschnittliche, insbesondere absolute, Länge der Fasern des ersten zerkleinerten Pflanzenmaterials, lassen sich die Wärmedämmeigenschaften nochmals verbessern.

Selbstverständlich ist es möglich, auch solches zweites zerkleinertes Pflanzen material zu verwenden, das sich in einer anderen Eigenschaft als dem Schäbenanteil von dem ersten zerkleinerten Pflanzenmaterial unterscheidet. Demgemäß umfasst das erfindungsgemäße Verfahren in einer Ausgestaltung den Einsatz nicht nur einer zweiten Zuführvorrichtung, sondern von zwei, drei, vier oder mehr solcher weiterer, zweiter Zuführvorrichtungen.

Das erfindungsgemäße Verfahren kann demgemäß in einer vorteilhaften Weiterentwicklung auch vorsehen, dass das zweite zerkleinerte Pflanzenmaterial, insbesondere Hanfpflanzenmaterial, auf einem Ausgangspflanzenmaterial mit einem Röstgrad im Bereich von 7 bis 9 basiert und/oder dass das zweite zerkleinerte Pflanzenmaterial, insbesondere Hanfpflanzenmaterial, einen Schäbenanteil kleiner 20 Gew.-%, insbesondere kleiner 15 Gew.-%, und besonders bevorzugt kleiner 10 Gew.-%, jeweils bezogen auf das Gesamtgewicht des zweiten zerkleinerten Pflanzenmaterials aufweist, und/oder dass die durchschnittliche Länge, insbesondere die absolute, Länge der Fasern des zweiten zerkleinerten Pflanzenmaterials, insbesondere Hanfpllanzenmaterials, im Bereich von 5 mm bis 30 mm, insbesondere im Bereich von 7 mm bis 25 mm und besonders bevorzugt im Bereich von 10 mm bis 20 mm liegt und/oder dass das zweite zerkleinerte Pflanzenmaterial auf Flachsstroh und/oder -fasern als Ausgangspflanzenmaterial basiert, wobei dem Röstgrad die folgende Skala zugrunde liegt: 1 = nicht geröstet und 9 = Röste abgeschlossen, mit 1 - 3 = olivgrün bis hellgrün, 4 - 6 = hellblond bis beige mit einsetzender Verpilzung, 7 - 9 = ockerbraun bis dunkelbraun mit zunehmender Verpilzung (gemäß IfPP (Informationen für die Pflanzenproduktion) Heft 7/1998, "Untersuchungen zu pflanzenbaulichen, erntetechnischen und ökonomischen Fragen des Anbaus von Faser- und Körnerhanf", Landesanstalt für Pflanzenbau Forchheim, ISSN 0937 - 6712, 7/1998). Bei Mitverwendung der vorangehend spezifizierten bevorzugten zweiten zerkleinerte Pflanzenmaterialien lassen sich die Wärmedämmeigenschaften der mit dem erfindungsgemäßen Verfahren erhaltenen Dämmstoffmatten nochmals verbessern.

Sehr zufriedenstellende Resultate stellen sich mit dem erfindungsgemäßen Verfahren insbesondere auch dann ein, wenn das erste zerkleinerte Pflanzenmaterial auf Ausgangspflanzenmaterial basiert, das beim Zerkleinerungsprozess ein Gemisch aus Fasern und Schäben bildet. Solches Pflanzenmaterial kann beispielsweise ausgewählt sein aus der Gruppe bestehend aus Hanf, Jute, Nessel, Flachs, Kenaf, Ramie und Miscanthus oder beliebigen Mischungen hiervon. Des Weiteren ist es möglich, für das zweite zerkleinerte Pflanzenmaterial auf Ausgangspflanzenmaterial zurückzugreifen ausgewählt aus der Gruppe bestehend aus Hanf, Jute, Nessel, Flachs, Kenaf, Ramie, Miscanthus, Raps, Getreidestroh, Sisal, Rohrkolben und Schilf oder beliebigen Mischungen hiervon. D.h. für das zweite zerkleinerte Pflanzenmaterial können auch solche Ausgangspflanzenmaterialien verwendet werden, die bei der Zerkleinerung keine Schäben aufweisen.

Demgemäß kann in einer Variante des erfindungsgemäßen Verfahrens vorgesehen sein, dass die Pflanzenfasern des ersten und/oder zweiten zerkleinerten Pflanzenmaterials ausgewählt sind aus der Gruppe bestehend aus Hanf-, Flachs-, Jute-, Sisal-, Raps-, Kokos-, Kenaf-, Nessel-, Ramie-, Miscanthus-, Getreidestroh-, Rohrkolben- und Schilffasern oder von Mischungen hiervon und/oder dass die Schäben ausgewählt sind aus der Gruppe bestehend aus Hanf-, Flachs-, Jute-, Kenaf-, Nessel-, Ramie- und Miscanthusschäben oder von beliebigen Mischungen hiervon.

Besonders bevorzugte werden solche ersten und/oder zweiten zerkleinerten Pflanzenmaterialien in dem erfindungsgemäßen Verfahren eingesetzt, die über eine Restfeuchte im Bereich von 5 bis 30 Gew.-%, besonders bevorzugt im Bereich von 7 bis 22 Gew.-% und besonders bevorzugt im Bereich von 8 bis 16 Gew.-% verfügen.

Erstes und gegebenenfalls zweites zerkleinertes Pflanzenmaterial erhält man besonders bevorzugt durch ein zerkleinerndes Aufbereitungsverfahren von nachwachsenden Rohstoffen, insbesondere von faserhaltigem Pflanzenmaterial, vorzugsweise Bastpflanzenmaterial, umfassend die Schritte
aa) Zurverfügungstellung von geernteten nachwachsenden Rohstoffen, insbesondere Bastpflanzen,
bb) Zuführen dieser nachwachsenden Rohstoffe, insbesondere Bastpflanzen, zu einer Vorzerkleinerungsvorrichtung, insbesondere umfassend mindestens eine Rotorschere und/oder mindestens einen Rotorreißer,
cc) Vorzerkleinern der nachwachsenden Rohstoffe, insbesondere Bastpflanzen, in der Vorzerkleinerungsvorrichtung,
dd) Zuführen der vorzerkleinerten nachwachsenden Rohstoffe, insbesondere Bastpflanzen, zu einer Zerkleinerungsvorrichtung, insbesondere umfassend mindestens einen Rotationsschneider und/oder mindestens einen Guillotinenschneider, insbesondere Guillotinenschneider,
ee) Zerkleinern der vorzerkleinerten nachwachsenden Rohstoffe, insbesondere Bastpflanzen, in der Zerkleinerungsvorrichtung, und
ff) Auffangen des zerkleinerten Pflanzenmaterials.

Wenngleich nicht zwingend erforderlich, kann es in manchen Fällen von Vorteil sein, die nachwachsenden Rohstoffe, insbesondere Bastpflanzen, mit einem Pflanzenaufschließer, insbesondere Bastpflanzenaufschließer, beispielsweise Hanfaufschließer, grob vorzuzerkleinem. Dieses geschieht regelmäßig bereits auf dem Feld. Dieses Vorgehen empfiehlt sich insbesondere bei niederen Röstgraden, beispielsweise im Bereich von 1 bis 3.

Das erfindungsgemäße Verfahren löst die der Erfindung zu Grunde liegende Aufgabe auch dann besonders zufriedenstellend, wenn das erste zerkleinerte Pflanzenmaterial enthaltend Pflanzenfasern und Schäben hauptsächlich Pflanzenfasern und/oder Schäben mit einer durchschnittlichen Länge, insbesondere absoluten Länge, im Bereich von 2 bis 15 cm, insbesondere im Bereich von 3 bis 12 cm und besonders bevorzugt im Bereich von 4 bis 10 cm, aufweist. Besonders geeignete Längen an vorzerkleinerten Pflanzenmaterialien, insbesondere Fasern/oder Schäben, vorzugsweise Fasern und Schäben, kann man auch dadurch erhalten, dass die Breite der Schneidscheiben der Rotorschere oder des Rotorreißers im Bereich von 4 cm bis 15 cm, vorzugsweise im Bereich von 5 bis 12 cm und besonders bevorzugt im Bereich von 7 bis 10 cm liegt und/oder dass der Durchmesser der Schneidscheiben im Bereich von 300 mm bis 900 mm, vorzugsweise im Bereich von 400 mm bis 800 mm und besonders bevorzugt im Bereich von 600 mm bis 700 mm liegt. Die Rotorschere oder der Rotorreißer weisen regelmäßig zwei, insbesondere gegenläufig arbeitende, Schneidwellen auf. Geeignete Rotorscheren bzw. Rotorreißer sind dem Fachmann z.B. aus der WO2013/167497 bekannt.

Die Einstellung der gewünschten Länge an Pflanzenfasern und Schäben gelingt gemäß einer besonders zweckmäßigen Ausführungsform auch dann besonders zuverlässig, wenn der Guillotinenschneider mindestens ein im Wesentlichen quer zur Förderrichtung des Stroms an vorzerkleinerten nachwachsenden Rohstoffen, insbesondere Bastpflanzen, insbesondere linear, bewegbares oder bewegtes Schneidmesser umfasst bzw. einsetzt. Auf diese Weise gelingt es besonders gut, die Pflanzenfasern und Schäben auf eine vorbestimmte durchschnittliche Länge zu bringen, ohne eine besonders große Streubreite der erhaltenen Längen in Kauf nehmen zu müssen. Demgemäß kann die Vorzerkleinerung gemäß Schritt cc) und die Zerkleinerung gemäß Schritt ee) in einer Weise vorgenommen werden, dass nach Schritt ee) hauptsächlich, insbesondere im Bereich von 70 bis 99 Gew. -% und besonders bevorzugt im Bereich von 80 bis 99 Gew. -%, jeweils bezogen auf das Gesamtgewicht des aufgefangenen zerkleinerten Pflanzenmaterials, enthaltend Pflanzenfasern und/oder Schäben, insbesondere enthaltend Pflanzenfasern und Schäben, mit einer durchschnittlichen Länge, insbesondere absoluten Länge, im Bereich von 2 bis 15 cm, insbesondere im Bereich von 3 bis 12 cm und besonders bevorzugt im Bereich von 4 bis 10 cm, erhalten werden.

Zu einer besonders homogenen Verteilung der Komponenten innerhalb der nach dem erfindungsgemäßen Verfahren erhaltenen Dämmstoffmatte sowie zu einem besonders anlagenschonenden und komplikationsfreien Verfahrensablauf gelangt man insbesondere auch dadurch, dass die dem ersten zerkleinerten Pflanzenmaterial enthaltend Pflanzenfasern und Schäben zugrundeliegenden Pflanzenstängel vor der Zerkleinerung eine durchschnittliche Dicke, vorzugsweise maximale Dicke, bis 5 cm, vorzugsweise bis 4,5 cm und besonders bevorzugt im Bereich von 0,2 cm bis 3,5 cm besaßen. In gleicher Weise sind für das zweite zerkleinerte Pflanzenmaterial solche Pflanzenfasern und gegebenenfalls schweben besonders geeignet, deren zugrundeliegenden Pflanzenstängel vor der Zerkleinerung eine durchschnittliche Dicke, vorzugsweise maximale Dicke, bis 5 cm, vorzugsweise bis 4,5 cm und besonders bevorzugt im Bereich von 0,2 cm bis 3,5 cm besaßen.

Für das erfindungsgemäße Verfahren greift man bevorzugt auf solche erste zerkleinerte Pflanzenmaterialien zurück mit einem Faseranteil im Bereich von 10 bis 90 Gew.-%, insbesondere im Bereich von 20 bis 60 Gew.-% und besonders bevorzugt im Bereich von 40 bis 60 Gew.-%, und/oder einem Schäbenanteil im Bereich von 10 bis 60 Gew.-%, insbesondere im Bereich von 20 bis 60 Gew.-% und besonders bevorzugt im Bereich von 20 bis 45 Gew.-%.

Es hat sich als besonders zweckmäßig erwiesen, aus der Mischung enthaltend die Pflanzenfasern und Schäben sowie das Bindemittel, insbesondere die Bindemittelfasern, vor Austragung zu einem Faserflor Staub- und/oder Fremdteilchen, insbesondere mittels mindestens eines Zyklonabscheiders und/oder Kondensers, insbesondere Zellenradkondensers, abzuscheiden. Die bei Berücksichtigung dieses Verfahrensschritts erhaltenen Faservliesprodukte zeichnen sich durch besondere Stabilität und Dämmeigenschaften, insbesondere Wärmedämmeigenschaften aus. Zyklonabscheider bzw. Kondenser sind dem Fachmann bekannt. Geeignete Kondenser sind z.B. Zellradkondenser. Geeignete Zyklonabscheider finden sich u.a. in der DE 30 23 069, DE 28 38 173 und DE 164 88 60 beschrieben.

In einer bevorzugten Ausgestaltung des erfindungsgemäßen Verfahrens kann zum Beispiel für den Fall, dass aus dem Faserflor ein Vorvlies gebildet wird, vorzugsweise auf ein Paar an Einzugswalzen, in der Regel eine Ober- und eine Unterwalze, zurückgegriffen werden. Der Faserflor wird hierbei von dem Walzenpaar erfasst und unter Druck durch den schmalen Spalt zwischen diesen Walzen hindurchtransportiert. Nach Durchtritt durch den Walzenspalt wird das Material zum Beispiel von einem Vliesstreuer, umfassend eine schnell rotierende Stiftwalze, die mit einer Vielzahl an Stiften bzw. Nadeln versehen ist, erfasst, zerkleinert und zerfasert sowie auf eine rotierende und auf ein Förderband geschleudert, auf dem die zerkleinerten Pflanzenmaterialien als Faservlies abgelegt werden.

Das Vorvlies kann sodann über einen Bandförderer gegebenenfalls unter Zwischenschaltung eines Umlaufförderers dem nächsten Verfahrensschritt zugeführt werden.

In einer besonders zweckmäßigen Ausgestaltung des erfindungsgemäßen Verfahrens ist vorgesehen, dass die erste und/oder zweite Zuführstation ein Wiegemodul, eine Vorrichtung zur Auflockerung des ersten und/oder zweiten zerkleinerten Pflanzenmaterials und/oder eine Vorrichtung zur Beaufschlagung des ersten und/oder zweiten zerkleinerten Pflanzenmaterials mit mindestens einem Flammschutzmittel, insbesondere eine Vorrichtung zum Besprühen des zerkleinerten Pflanzenmaterials mit einem wässrigen System, enthaltend mindestens ein Flammschutzmittel, umfasst. Durch die Einbindung eines Wiegemoduls lässt sich, vorzugsweise automatisiert, sicherstellen, dass die erhaltenen Dämmstoffmatten keine signifikanten Dicken-, Festigkeits- und/oder Dichteschwankungen aufweisen. Dies wäre einer einheitlichen, guten Wärmedämmung wie auch einer guten Stabilität abträglich.

Dicken-, Festigkeits- und/oder Dichteschwankungen lassen sich auch dadurch nochmals erheblich reduzieren, dass zwischen Vorvlies- und Vliesbildung (Schritte l) und m)) ein Wiegemodul vorgesehen ist zur Bestimmung der Menge an Vorvlies. Indem man das Wiegemodul mit einer Steuereinheit verbindet, kann man die pro Zeiteinheit dem zweiten, insbesondere aerodynamischen, Vliesbildner zuzuführende Materialmenge gezielt eingestellen.

Um hinreichend flammgeschützte Dämmstoffmatten zu erhalten, hat es sich als zweckmäßig erwiesen, dass der Faserflor und/oder das Vorvlies und/oder das Vlies mit mindestens einem Flammschutzmittel, insbesondere mit einem wässrigen System, enthaltend mindestens ein Flammschutzmittel, beaufschlagt werden.

Geeignete Flammschutzmittel können hierbei ausgewählt werden aus der Gruppe bestehend aus stickstoffhaltigen Phosphaten, insbesondere Ammonium-, Melamin- oder Guanidinphosphat, Aluminiumphosphaten, Boraten, insbesondere Ammonium-, Melamin-, Guanidin-, Kalium- oder Natriumboraten, Borsäure, Borphosphorsäureestern, prä-oxidierten Viskosefasern, prä-oxidierten Polyacrylnitril-Fasern, Kohlenstofffasern und Reisschalen oder deren beliebige Mischungen. Hierbei lassen sich stickstoffhaltige Phosphate, insbesondere Ammonium-, Melamin- oder Guanidinphosphate, Aluminiumphosphate, Borate, insbesondere Ammonium-, Melamin-, Guanidin-, Kalium- oder Natriumborate, Borsäure oder Borphosphorsäureester oder deren beliebige Mischungen sehr wirksam in Form von wässrigen Systemen, beispielsweise wässrigen Lösungen, in das als Materiallage, Faserflor, Vorvlies oder Vlies vorliegende Material eintragen.

Weiterhin ist es bevorzugt, dass der erste und/oder zweite Vliesbildner eine mit Unterdruck beaufschlagte bzw. beaufschlagbare Siebtrommel zur Abscheidung von Staubteilchen umfasst. Auf diese Weise lässt sich ebenfalls Förderluft absaugen. Das Abschneiden von Staub und gegebenenfalls auch Fördeluft tragen zu nochmals verbesserten Eigenschaften der erhaltenen Dämmstoffmatten bei, zum Beispiel in Bezug auf Stabilität und Festigkeit.

Als Bindemittel greift man bei den erfindungsgemäßen Verfahren bevorzugt auf Bindefasern (auch Bindemittelfasern genannt) zurück. Hierbei können thermoplastische Mono- oder Multikomponentenfasern zum Einsatz kommen, wobei Bikomponentenfasern regelmäßig bevorzugt sind. Das Bindemittel kann grundsätzlich in Form von Fasern, Granulat oder Pulver oder als beliebige Mischung dieser Bindemittelformen eingesetzt werden. Bevorzugt sind thermoplastische Bindemittel. Bevorzugt werden für das erfindungsgemäße Herstellungsverfahren Bindemittel in Form von Bindemittelfasern eingesetzt. Das Bindemittel basiert regelmäßig auf thermoplastischen Polymeren. Diese Materialien verfügen über eine Erweichungstemperatur, auch Glasübergangstemperatur genannt, oberhalb der sie eine verformbare, schmelzeähnliche Konsistenz annehmen. Demgemäß wird bei der als Thermobonding bekannten Verfestigung der in dem Vorvlies bzw. Vlies vorliegenden Mischung an Pflanzenfasern und Bindemitteln eine Verbindung einzelnen Fasern oder Faserbündel über das temporär erweichte Bindemittel erreicht. Denn beim Abkühlen erstarren die thermoplastischen Bindemittel wieder. Als Bindefasern kommen bevorzugt thermoplastische Mono- oder Multikomponentenfasern zum Einsatz, insbesondere Bikomponentenfasern. Geeignete Bikomponentenfasern können zum Beispiel auf Polyestern oder Polylactiden basieren. Als Bindemittel kann ebenfalls auf Phenolharzfasern zurückgegriffen werden. Geeignete Bindemittel, die für die Verfestigung von Faservliesen geeignet sind, sind dem Fachmann bekannt. Dieses trifft insbesondere auch zu auf geeignete Bindemittelfasern. Wird in Schritt q) das Bindemittel mit Wasserdampf, insbesondere heißem oder überhitztem Wasserdampf, beaufschlagt, kann gegebenenfalls der Aktivierungsschritt r) entfallen. Wird nicht mit Wasserdampf beaufschlagt, hat es sich als vorteilhaft erwiesen, das Bindemittel in einem separatem Schritt zu aktivieren, so dass eine feste Verbindung mit den Fasern und Schäben eintritt. Dieses gelingt bei thermoplastischen Bindemitteln regelmäßig besonders zweckmäßig durch Behandlung mit Wärme. Hierbei wird das Erweichungsverhalten der thermoplastischen Materialien ausgenutzt.

Der Abkühlungsschritt t) wird in einer besonders zweckmäßigen Ausgestaltung in einer Weise durchgeführt, dass zum Beispiel über die gewählte Temperatur und die Zeitdauer der Abkühlung, man zu einer hinreichend verfestigten Dämmstoffmatte gelangt. Die Einstellung des Abkühlschritts zu Erlangung einer Dämmstoffmatte mit gewünschter Festigkeit ist dem Fachmann bekannt.

In einer besonders bevorzugten Ausführungsform umfasst das erfindungsgemäße Verfahren die Schritte:
a) die Zurverfügungstellung von erstem zerkleinerten Pflanzenmaterial enthaltend Pflanzenfasern und Schäben, wobei die Pflanzenfasern und Schäben zumindest in Teilen miteinander verbunden sind,
b) Zurverfügungstellung mindestens einer Bindefaser,
c) gegebenenfalls Zurverfügungstellung von zweitem zerkleinerten Pflanzenmaterial enthaltend Pflanzenfasern, das einen reduzierten Anteil an Schäben aufweist oder im Wesentlichen frei von Schäben ist, und/oder das sich in einer anderen Eigenschaft als dem Schäbenanteil von dem ersten zerkleinerten Pflanzenmaterial unterscheidet,
d) Herstellung einer ersten Materiallage aus dem ersten zerkleinerten Pflanzenmaterial enthaltend Pflanzenfasern und Schäben in einer ersten Zuführvorrichtung,
e) gegebenenfalls Herstellung mindestens einer weiteren, zweiten Materiallage aus dem zweiten zerkleinerten Pflanzenmaterial enthaltend Pflanzenfasern, das einen reduzierten Anteil an Schäben aufweist oder im Wesentlichen frei von Schäben ist, und/oder aus einem zweiten zerkleinerten Pflanzenmaterial, das sich in einer anderen Eigenschaft als dem Schäbenanteil von dem ersten zerkleinerten Pflanzenmaterial unterscheidet, in einer weiteren, zweiten Zuführvorrichtung,
f) Versetzten der ersten und gegebenenfalls der zweiten Materiallage mit mindestens einem Flammschutzmittel, insbesondere Besprühen der Materiallage von der Oberseite mit einem wässrigen System, enthaltend mindestens ein Flammschutzmittel,
g) Vermischen des ersten zerkleinerten Pflanzenmaterials enthaltend Pflanzenfasern und Schäben mit der mindestens einen Bindemittelfaser, und gegebenenfalls mit dem zweiten zerkleinerten Pflanzenmaterial enthaltend Pflanzenfasern, das einen reduzierten Anteil an Schäben aufweist oder im Wesentlichen frei von Schäben ist und/oder das sich in einer anderen Eigenschaft als dem Schäbenanteil von dem ersten zerkleinerten Pflanzenmaterial unterscheidet, im Luftstrom,
h) Abscheiden von Staub- und/oder Fremdteilchen aus der erhaltenen Mischung, insbesondere mittels mindestens eines Zyklonabscheiders und/oder Kondensers, insbesondere Zellenradkondensers,
i) gegebenenfalls Zwischenlagerung der nach Schritt g) bzw. h) erhaltenen Mischung,
j) Austragung der Mischung auf ein Förderband unter Ausbildung eines Faserflors,
k) gegebenenfalls Behandeln des Faserflors mit mindestens einem Flammschutzmittel, insbesondere Beaufschlagen des Faserflors von der Oberseite mit einem wässrigen System, enthaltend mindestens ein Flammschutzmittel,
l) Bilden eines Vorvlieses mittels eines ersten Vliesbildners, insbesondere ausgestattet mit Nadeln oder Stiften, oder mittels mindestens eines Vliesstreuers, umfassend oder bestehend aus mindestens einer Stiftwalze, wobei die Mischung vorzugsweise vermittels einer ersten Transporteinheit, insbesondere enthaltend mindestens ein Walzenpaar aus Ober- und Unterwalze, dem Vliesbildner zugeführt wird,
m) gegebenenfalls Behandeln des Vorvlieses mit mindestens einem Flammschutzmittel, insbesondere Beaufschlagen des Vorvlieses von der Oberseite mit einem wässrigen System, enthaltend mindestens ein Flammschutzmittel,
o) Bilden eines Vlieses aus dem Vorvlies gemäß Schritt l) oder m) mittels eines zweiten Vliesbildners, der ein aerodynamischer Vliesbildner ist, enthaltend einen Tambour ausgestattet mit einem Sägezahndraht, wobei das Vorvlies vorzugsweise vermittels einer zweiten Transporteinheit, enthaltend eine Oberwalze und einen Zuführtisch, dem Tambour zugeführt wird,
p) gegebenenfalls Behandeln dieses Vlieses mit mindestens einem Flammschutzmittel, insbesondere Beaufschlagen des Vlieses von der Oberseite mit einem wässrigen System, enthaltend mindestens ein Flammschutzmittel,
r) Beaufschlagen bzw. Behandeln des gemäß Schritt o) oder p) erhaltenen Vlieses mit Wärme zwecks Thermobonding der Bindefasern und gleichzeitiges oder zeitlich versetztes Beaufschlagen des Vlieses mit Druck,
t) Abkühlen des gemäß Schritt r) verfestigten Vlieses und gegebenenfalls Beaufschlagen mit Druck und
u) Vereinzeln des verfestigten Vlieses zu Dämmstoffmatten,
wobei die Dämmstoffmatten eine Dichte im Bereich von 20 bis 120 km/m³ aufweisen.

Die der Erfindung zu Grunde liegende Aufgabe wird des Weiteren gelöst durch Dämmstoffmatten mit einer Dichte im Bereich von 20 bis 120 kg/m³, erhältlich gemäß den erfindungsgemäßen Verfahren. In einer bevorzugten Ausgestaltung ist vorgesehen, dass diese Dämmstoffmatte eine Hanf- Dämmstoffmatte, enthaltend Hanffasern und Hanfschäben, darstellt. Die erfindungsgemäßen Dämmstoffmatten sind als Wärmedämmmatten bzw. - platten ebenso geeignet wie als Schalldämmmatten bzw. -platten. Geeignete Wärmedämmmatten können sowohl für die Dämmung von Außenfassaden von Gebäuden als auch für die Dämmung von Dächern, das heißt als Gefachdämmung eingesetzt werden. Darüber hinaus können die erfindungsgemäßen Dämmstoffmatten für die Innendämmung eingesetzt werden, d.h. sowohl für die Wärmedämmung von Wänden in Innenräumen von Gebäuden also auch für die Schalldämmung von Wänden im Gebäudeinneren.

Mit dem erfindungsgemäßen Verfahren sind insbesondere Dämmstoffmatten mit einer Dichte im Bereich von 30 bis 110 kg/m³ zugänglich. Setzt man zusätzlich einen Kalander ein, können auch Dämmstoffmatten mit einer Dichte bis z.B. 600 kg/m³, vorzugsweise bis 500 kg/m³ erhalten werden. Demgemäß sind mit dem erfindungsgemäßen Verfahren sowohl Dämmstoffmatten für die Gefachdämmung zugänglich, welche regelmäßig eine Dichte im Bereich von 30 bis 50 kg/m³ aufweisen, wie auch Dämmstoffmatten für die Fassadendämmung, für welche im Allgemeinen die Dichte im Bereich von 90 bis 110 kg/m³ zu liegen hat.

Seit verständlich ist es möglich, zwei oder mehrere vereinzelte Dämmstoffmatten über ihre jeweils aneinander anliegenden Seitenwände miteinander zu verkleben, um auf diese Weise zu dem Matten mit größerer Dämmwirkung und gegebenenfalls auch Stabilität zu gelangen.

Der vorliegenden Erfindung liegt die überraschende Erkenntnis zu Grunde, dass das sich mit dem erfindungsgemäßen Verfahren auch solche zerkleinerte Pflanzenmaterialien aus nachwachsenden Rohstoffen zu Dämmstoffmatten verarbeiten lassen, in denen gleichzeitig Pflanzenfasern und Schäben vorliegen und wobei zudem die Pflanzenfasern und Schäben zumindest in Teilen miteinander verbunden vorliegen. Das heißt mit dem erfindungsgemäßen Verfahren entfällt die Notwendigkeit, Pflanzenfasern und Schäben vor der eigentlichen Herstellung einer Dämmstoffmatte voneinander zu trennen. Bereits aus diesem Grund ist das erfindungsgemäße Verfahren energetisch vorteilhaft und damit kostengünstiger als Verfahren des Stands der Technik. Des Weiteren geht mit dem erfindungsgemäßen Verfahren ein geringer Wartungsaufwand einher. So kommt es nicht zu Produktionsunterbrechungen durch Verstopfungen von Transportkanälen oder dadurch, dass rotierende Werkzeuge durch Schäben blockiert werden. Außerdem gelingt mit dem erfindungsgemäßen Verfahren überraschenderweise eine sehr homogene Bildung der Dämmstoffmatte, das heißt Pflanzenfasern und Schäben sind über die gesamte Ausdehnung der Dämmstoffmatte gleichmäßig verteilt. Hierdurch wird eine sehr gute und gleichmäßige Dämmung, und zwar sowohl Wärmedämmung wie auch Schalldämmung herbeigeführt. Demgemäß sind auch die Dichteunterschiede innerhalb der nach dem erfindungsgemäßen Verfahren erhältlichen Dämmstoffmatte zu vernachlässigen bzw. nicht existent. Die nach diesem Verfahren erhältlichen Produkte verfügen daher über eine ausgeprägte Stabilität und können beispielsweise für die Außenfassadendämmung eingesetzt werden. Außerdem gestattet das erfindungsgemäße Verfahren die flexible Eintragung von sowohl Bindemittel wie auch Flammschutzmittel an verschiedenen Stellen des Verfahrensverlaufs. Hierdurch können Produkte für ganz bestimmte Anwendungen gezielt unzuverlässig hergestellt werden. Schließlich können mit dem erfindungsgemäßen Verfahren Dämmstoffmatten mit stark unterschiedlichen Dichten erhalten werden. Demgemäß gestattet das erfindungsgemäße Verfahren sowohl die Herstellung von Dämmstoffmatten für die Gefachdämmung als auch für die Fassadendämmung auf ein und derselben Anlage.

Die in der vorstehenden Beschreibung und in den Ansprüchen offenbarten Merkmale der Erfindung können sowohl einzeln aus auch in jeder beliebigen Kombination für die Verwirklichung der Erfindung in ihren verschiedenen Ausführungsformen wesentlich sein.

## Patentansprüche

1. Verfahren zur Herstellung von Dämmstoffmatten, umfassend
a) die Zurverfügungstellung von erstem zerkleinerten Pflanzenmaterial enthaltend Pflanzenfasern und Schäben, wobei die Pflanzenfasern und Schäben zumindest in Teilen miteinander verbunden sind,
b) Zurverfügungstellung mindestens eines Bindemittels, insbesondere Bindefaser,
d) Herstellung einer ersten Materiallage aus dem ersten zerkleinerten Pflanzenmaterial enthaltend Pflanzenfasern und Schäben in einer ersten Zuführvorrichtung,
g) Vermischen des ersten zerkleinerten Pflanzenmaterials enthaltend Pflanzenfasern und Schäben mit dem mindestens einem Bindemittel, insbesondere der mindestens einen Bindefaser, insbesondere im Luftstrom,
h) gegebenenfalls Abscheiden von Staub- und/oder Fremdteilchen aus der nach Schritt g) erhaltenen Mischung,
i) gegebenenfalls Zwischenlagerung der nach Schritt g) bzw. h) erhaltenen Mischung,
j) Austragung der Mischung auf ein Förderband unter Ausbildung eines Faserflors,
l) Bilden eines Vorvlieses mittels mindestens eines ersten Vliesbildners, insbesondere ausgestattet mit Nadeln oder Stiften, und/oder mittels mindestens eines Vliesstreuers, insbesondere umfassend oder bestehend aus mindestens einer Stiftwalze, wobei die Mischung vorzugsweise vermittels einer ersten Transporteinheit dem Vliesbildner oder Vliesstreuer zugeführt wird,
n) gegebenenfalls zusätzlich zu Schritt g) Beaufschlagen des Vorvlieses, insbesondere Bestreuen des Vorvlieses, mit mindestens einem partikulären Bindemittel,
o) Bilden eines Vlieses aus dem Vorvlies gemäß Schritt l) oder n) mittels eines zweiten Vliesbildners, enthaltend einen Tambour, insbesondere ausgestattet mit einem Sägezahndraht, wobei das Vorvlies vermittels einer zweiten Transporteinheit, enthaltend mindestens ein Walzenpaar aus Ober- und Unterwalze oder enthaltend eine Oberwalze und einen Zuführtisch, dem Tambour zugeführt wird,
r) Aktivieren des Bindemittels, insbesondere Behandeln des gemäß Schritt o) erhaltenen Vlieses mit Wärme zwecks Thermobonding des Bindemittels, und gleichzeitiges oder zeitlich versetztes Beaufschlagen des Vlieses mit Druck und
u) Vereinzeln des verfestigten Vlieses zu Dämmstoffmatten,
wobei die Dämmstoffmatten eine Dichte im Bereich von 20 bis 120 kg/m³ aufweisen.

2. Verfahren zur Herstellung von Dämmstoffmatten, umfassend
a) die Zurverfügungstellung von erstem zerkleinerten Pflanzenmaterial enthaltend Pflanzenfasern und Schäben, wobei die Pflanzenfasern und Schäben zumindest in Teilen miteinander verbunden sind,
b) Zurverfügungstellung mindestens eines Bindemittels, insbesondere Bindefaser,
d) Herstellung einer ersten Materiallage aus dem ersten zerkleinerten Pflanzenmaterial enthaltend Pflanzenfasern und Schäben in einer ersten Zuführvorrichtung, g) Vermischen des ersten zerkleinerten Pflanzenmaterials enthaltend Pflanzenfasern und Schäben mit dem mindestens einem Bindemittel, insbesondere der mindestens einen Bindefaser, insbesondere im Luftstrom,
h) gegebenenfalls Abscheiden von Staub- und/oder Fremdteilchen aus der nach Schritt g) erhaltenen Mischung,
i) gegebenenfalls Zwischenlagerung der nach Schritt g) bzw. h) erhaltenen Mischung,
j) Austragung der Mischung auf ein Förderband unter Ausbildung eines Faserflors,
l) Bilden eines Vorvlieses mittels mindestens eines ersten Vliesbildners, insbesondere ausgestattet mit Nadeln oder Stiften, und/oder mittels mindestens eines Vliesstreuers, insbesondere umfassend oder bestehend aus mindestens einer Stiftwalze, wobei die Mischung vorzugsweise vermittels einer ersten Transporteinheit dem Vliesbildner oder Vliesstreuer zugeführt wird,
n) gegebenenfalls zusätzlich zu Schritt g) Beaufschlagen des Vorvlieses, insbesondere Bestreuen des Vorvlieses, mit mindestens einem partikulären Bindemittel,
o) Bilden eines Vlieses aus dem Vorvlies gemäß Schritt l) oder n) mittels eines zweiten Vliesbildners, enthaltend einen Tambour, ausgestattet mit einem Sägezahndraht, wobei das Vorvlies vermittels einer zweiten Transporteinheit, enthaltend mindestens ein Walzenpaar aus Ober- und Unterwalze oder enthaltend eine Oberwalze und einen Zuführtisch, dem Tambour zugeführt wird,
r) Aktivieren des Bindemittels, insbesondere Behandeln des gemäß Schritt o) erhaltenen Vlieses mit Wärme zwecks Thermobonding des Bindemittels, und gleichzeitiges oder zeitlich versetztes Beaufschlagen des Vlieses mit Druck und
u) Vereinzeln des verfestigten Vlieses zu Dämmstoffmatten,

3. Verfahren nach Anspruch 1 oder 2, ferner umfassend
c) Zurverfügungstellung von zweitem zerkleinerten Pflanzenmaterial enthaltend Pflanzenfasern, das einen reduzierten Anteil an Schäben aufweist oder im Wesentlichen frei von Schäben ist, und/oder das sich in einer anderen Eigenschaft als dem Schäbenanteil von dem ersten zerkleinerten Pflanzenmaterial unterscheidet,
e) Herstellung mindestens einer weiteren, zweiten Materiallage aus dem zweiten zerkleinerten Pflanzenmaterial enthaltend Pflanzenfasern, das einen reduzierten Anteil an Schäben aufweist oder im Wesentlichen frei von Schäben ist, und/oder aus einem zweiten zerkleinerten Pflanzenmaterial, das sich in einer anderen Eigenschaft als dem Schäbenanteil von dem ersten zerkleinerten Pflanzenmaterial unterscheidet, in einer weiteren, zweiten Zuführvorrichtung,
f) Versetzten der zweiten Materiallage mit mindestens einem Flammschutzmittel, insbesondere Beaufschlagen der Materiallage von der Oberseite mit einem wässrigen System, enthaltend mindestens ein Flammschutzmittel, und
g) Vermischen des ersten zerkleinerten Pflanzenmaterials enthaltend Pflanzenfasern und Schäben mit dem mindestens einen Bindemittel und mit dem zweiten zerkleinerten Pflanzenmaterial enthaltend Pflanzenfasern, das einen reduzierten Anteil an Schäben aufweist oder im Wesentlichen frei von Schäben ist und/oder das sich in einer anderen Eigenschaft als dem Schäbenanteil von dem ersten zerkleinerten Pflanzenmaterial unterscheidet.

4. Verfahren nach Anspruch 3, **dadurch gekennzeichnet, dass** in Schritt g) das erste zerkleinerte Pflanzenmaterial enthaltend Pflanzenfasern und Schäben mit dem mindestens einen Bindemittel in Form von Bindefasern und mit dem zweiten zerkleinerten Pflanzenmaterial enthaltend Pflanzenfasern, das einen reduzierten Anteil an Schäben aufweist oder im Wesentlichen frei von Schäben ist und/oder das sich in einer anderen Eigenschaft als dem Schäbenanteil von dem ersten zerkleinerten Pflanzenmaterial unterscheidet im Luftstrom vermischt werden.

5. Verfahren nach einem der vorangehenden Ansprüche, ferner umfassend
k) Behandeln des Faserflors mit mindestens einem Flammschutzmittel, insbesondere Beaufschlagen des Faserflors von der Oberseite mit einem wässrigen System, enthaltend mindestens ein Flammschutzmittel, und/oder
m) Behandeln des Vorvlieses mit mindestens einem Flammschutzmittel, insbesondere Beaufschlagen des Vorvlieses von der Oberseite mit einem wässrigen System, enthaltend mindestens ein Flammschutzmittel, und/oder
p) Behandeln dieses Vlieses mit mindestens einem Flammschutzmittel, insbesondere Beaufschlagen des Vlieses von der Oberseite mit einem wässrigen System, enthaltend mindestens ein Flammschutzmittel.

6. Verfahren nach einem der vorangehenden Ansprüche, ferner umfassend
q) Beaufschlagen des Vlieses mit Wasserdampf, insbesondere wenn in Schritt n) ein partikuläres Bindemittel, vorzugsweise in Pulverform, zugegeben wird, und/oder
r) Aktivieren des Bindemittels durch Behandeln des gemäß Schritt o), p) oder q) erhaltenen Vlieses mit Wärme zwecks Thermobonding des Bindemittels, insbesondere der Bindefasern, und gleichzeitiges oder zeitlich versetztes Beaufschlagen des Vlieses mit Druck,
s) gegebenenfalls Kalandrieren des gemäß Schritt q) oder r) erhaltenen Vlieses und
t) sofern in Schritt q), r) und/oder s) eine Wärmebehandlung stattgefunden hat, Abkühlen des gemäß Schritt q, r) und/oder s) verfestigten Vlieses und gegebenenfalls Beaufschlagen mit Druck.

7. Verfahren nach einem der vorangehenden Ansprüche, **dadurch gekennzeichnet, dass** der erste Vliesbildner ein aerodynamischer Vliesbildner, enthaltend mindestens eine Nadelwalze oder einen Tambour, ist und/oder dass der zweite Vliesbildner ein aerodynamischer Vliesbildner, enthaltend mindestens einen Tambour, ist.

8. Verfahren nach einem der vorangehenden Ansprüche, **dadurch gekennzeichnet, dass** das partikuläre Bindemittel in Form von Pulver, Granulat oder Fasern oder einer beliebigen Mischung hiervon vorliegt.

9. Verfahren nach einem der vorangehenden Ansprüche, **dadurch gekennzeichnet, dass** das Abscheiden von Staub- und/oder Fremdteilchen aus der nach Schritt g) erhaltenen Mischung mittels mindestens eines Zyklonabscheiders und/oder Kondensers, insbesondere Zellenradkondensers, vorgenommen wird.

10. Verfahren nach einem der vorangehenden Ansprüche, **dadurch gekennzeichnet, dass** die erste Transporteinheit mindestens ein Walzenpaar aus Ober- und Unterwalze enthält.

11. Verfahren nach einem Ansprüche 3 bis 9, **dadurch gekennzeichnet, dass** das zweite zerkleinerte Pflanzenmaterial, insbesondere Hanfpflanzenmaterial, auf Ausgangspflanzenmaterial mit einem höheren Röstgrad als das Ausgangspflanzenmaterial für das erste zerkleinerte Pflanzenmaterial basiert und/oder dass die durchschnittliche, insbesondere die absolute, Länge der Fasern des zweiten zerkleinerten Pflanzenmaterials, insbesondere Hanfpflanzenmaterials, kürzer ist als die durchschnittliche, insbesondere absolute, Länge der Fasern des ersten zerkleinerten Pflanzenmaterials und/oder dass das zweite zerkleinerte Pflanzenmaterial, insbesondere Hanfpflanzenmaterial, einen geringeren Anteil an Schäben als das erste zerkleinerte Pflanzenmaterial aufweist.

12. Verfahren nach einem Ansprüche 3 bis 11, **dadurch gekennzeichnet, dass** das zweite zerkleinerte Pflanzenmaterial, insbesondere Hanfpflanzenmaterial, auf einem Ausgangspflanzenmaterial mit einem Röstgrad im Bereich von 7 bis 9 basiert und/oder dass das zweite zerkleinerte Pflanzenmaterial, insbesondere Hanfpflanzenmaterial, einen Schäbenanteil kleiner 20 Gew.-%, insbesondere kleiner 15 Gew.-%, und besonders bevorzugt kleiner 10 Gew.-%, jeweils bezogen auf das Gesamtgewicht des zweiten zerkleinerten Pflanzenmaterials aufweist, und/oder dass die durchschnittliche Länge, insbesondere die absolute, Länge der Fasern des zweiten zerkleinerten Pflanzenmaterials, insbesondere Hanfpflanzenmaterials, im Bereich von 5 mm bis 30 mm, insbesondere im Bereich von 7 mm bis 25 mm und besonders bevorzugt im Bereich von 10 mm bis 20 mm liegt und/oder dass das zweite zerkleinerte Pflanzenmaterial auf Flachsstroh und/oder -fasern als Ausgangspflanzenmaterial basiert, wobei dem Röstgrad die folgende Skala zugrunde liegt: 1 = nicht geröstet und 9 = Röste abgeschlossen, mit 1 - 3 = olivgrün bis hellgrün, 4 - 6 = hellblond bis beige mit einsetzender Verpilzung, 7 - 9 = ockerbraun bis dunkelbraun mit zunehmender Verpilzung (gemäß IfPP (Informationen für die Pflanzenproduktion) Heft 7/1998, "Untersuchungen zu pflanzenbaulichen, erntetechnischen und ökonomischen Fragen des Anbaus von Faser- und Körnerhanf", Landesanstalt für Pflanzenbau Forchheim, ISSN 0937 - 6712, 7/1998).

13. Verfahren nach einem der vorangehenden Ansprüche, **dadurch gekennzeichnet, dass** die erste und/oder zweite Zuführstation ein Wiegemodul, eine Vorrichtung zur Auflockerung des ersten und/oder zweiten zerkleinerten Pflanzenmaterials und/oder eine Vorrichtung zur Beaufschlagung des ersten und/oder zweiten zerkleinerten Pflanzenmaterials mit mindestens einem Flammschutzmittel, insbesondere eine Vorrichtung zum Besprühen des zerkleinerten Pflanzenmaterials mit einem wässrigen System, enthaltend mindestens ein Flammschutzmittel, umfasst.

14. Verfahren nach einem der vorangehenden Ansprüche, **dadurch gekennzeichnet, dass** der Faserflor und/oder das Vorvlies und/oder das Vlies mit mindestens einem Flammschutzmittel, insbesondere mit einem wässrigen System, enthaltend mindestens ein Flammschutzmittel, beaufschlagt werden.

15. Verfahren nach einem der vorangehenden Ansprüche, **dadurch gekennzeichnet, dass** der erste und/oder zweite Vliesbildner eine mit Unterdruck beaufschlagte bzw. beaufschlagbare Siebtrommel zur Abscheidung von Staubteilchen umfasst.

16. Verfahren nach einem der vorrangehenden Ansprüche, **dadurch gekennzeichnet, dass** das erste zerkleinerte Pflanzenmaterial auf Ausgangspflanzenmaterial basiert ausgewählt aus der Gruppe bestehend aus Hanf, Jute, Nessel, Flachs, Kenaf, Ramie und Miscanthus oder beliebigen Mischungen hiervon und/oder dass das zweite zerkleinerte Pflanzenmaterial auf Ausgangspflanzenmaterial basiert ausgewählt aus der Gruppe bestehend aus Hanf, Jute, Nessel, Flachs, Kenaf, Ramie, Miscanthus, Raps, Getreidestroh, Sisal, Rohrkolben und Schilf oder beliebigen Mischungen hiervon.

17. Verfahren nach einem der vorangehenden Ansprüche, **dadurch gekennzeichnet, dass** die Pflanzenfasern des ersten und/oder zweiten zerkleinerten Pflanzenmaterials ausgewählt sind aus der Gruppe bestehend aus Hanf-, Flachs-, Jute-, Sisal-, Raps-, Kokos-, Kenaf-, Nessel-, Ramie-, Miscanthus-, Getreidestroh-, Rohrkolben- und Schilffasern oder von Mischungen hiervon und/oder dass die Schäben ausgewählt sind aus der Gruppe bestehend aus Hanf-, Flachs-, Jute-, Kenaf-, Nessel-, Ramie- und Miscanthusschäben oder von beliebigen Mischungen hiervon.

18. Verfahren nach einem der vorangehenden Ansprüche, **dadurch gekennzeichnet, dass** die Bindefasern thermoplastische Mono- oder Multikomponentenfasern darstellen, insbesondere Bikomponentenfasern.

19. Verfahren nach einem der vorangehenden Ansprüche, **dadurch gekennzeichnet, dass** das erste zerkleinerte Pflanzenmaterial enthaltend Pflanzenfasern und Schäben hauptsächlich Pflanzenfasern und/oder Schäben mit einer durchschnittlichen Länge, insbesondere absoluten Länge, im Bereich von 2 bis 15 cm, insbesondere im Bereich von 3 bis 12 cm und besonders bevorzugt im Bereich von 4 bis 10 cm, aufweist.

20. Verfahren nach einem der vorangehenden Ansprüche, **dadurch gekennzeichnet, dass** die dem ersten zerkleinerten Pflanzenmaterial enthaltend Pflanzenfasern und Schäben zugrundeliegenden Pflanzenstängel eine durchschnittliche Dicke, vorzugsweise maximale Dicke, bis 5 cm, vorzugsweise bis 4,5 cm und besonders bevorzugt im Bereich von 0,2 cm bis 3,5 cm besaßen.

21. Verfahren nach einem der vorangehenden Ansprüche, **dadurch gekennzeichnet, dass** das Flammschutzmittel stickstoffhaltige Phosphate, insbesondere Ammonium-, Melamin- und/oder Guanidinphosphate, Aluminiumphosphate, Borate, insbesondere Ammonium-, Melamin-, Guanidin-, Kalium- oder Natriumborate, Borsäure, Borphosphorsäureester, prä-oxidierte Viskosefasern, prä-oxidierten Polyacrylnitril-Fasern, Kohlenstofffasern, Reisschalen oder deren beliebige Mischungen umfasst.

22. Verfahren nach einem der vorangehenden Ansprüche, **dadurch gekennzeichnet, dass** das erste zerkleinerte Pflanzenmaterial einen Faseranteil im Bereich von 10 bis 90 Gew.-%, insbesondere im Bereich von 20 bis 60 Gew.-% und besonders bevorzugt im Bereich von 40 bis 60 Gew.-%, und/oder einen Schäbenanteil im Bereich von 10 bis 60 Gew.-%, insbesondere im Bereich von 20 bis 60 Gew.-% und besonders bevorzugt im Bereich von 20 bis 45 Gew.-%, aufweist.

23. Dämmstoffmatte, erhältlich gemäß dem Verfahren nach einem der vorangehenden Ansprüche, insbesondere Gebäudeaußendämmmatte oder Gebäudeinnendämmmatte, **gekennzeichnet durch** eine Dichte im Bereich von 20 bis 120 kg/m³.

24. Dämmstoffmatte nach Anspruch 23, **dadurch gekennzeichnet, dass** diese eine Hanf-Dämmstoffmatte, enthaltend Hanffasern und Hanfschäben, darstellt.

## Claims

1. A method for the preparation of insulating material mats, comprising
a) the provision of a first ground plant matter containing plant fibres and shives, wherein the plant fibres and shives are connected to one another at least in parts,
b) provision of at least one binding agent, in particular binding fibre,
d) preparation of a first layer of material made of the first ground plant matter containing plant fibres and shives in a first feed device,
g) blending of the first ground plant matter containing plant fibres and shives with the at least one binding agent, in particular the at least one binding fibre, in particular in the air stream,
h) if necessary, separation of dust and/or foreign particles from the mixture obtained according to step g),
i) if necessary, intermediate storage of the mixture obtained according to step g) or h),
j) discharge of the mixture onto a conveyor belt, forming a fibrous web,
l) formation of a pre-web by means of at least one first non-woven former, in particular equipped with needles or pins, and/or by means of at least one non-woven disperser, in particular comprising or consisting of at least one pin roll, wherein the mixture is preferably fed by means of a first transport unit to the non-woven former or non-woven disperser,
n) if necessary, in addition to step g), supplying of the pre-web, in particular strewing of the pre-web, with at least one particular binding agent,
o) formation of a non-woven from the pre-web according to step l) or n) by means of a second non-woven former, containing a drum, in particular equipped with a saw-tooth wire, wherein the pre-web is fed by means of a second transport unit, containing at least one pair of rollers consisting of an upper and a lower roller or containing an upper roller and a feed table, to the drum,
r) activation of the binding agent, in particular treatment of the non-woven obtained according to step o) with heat for the purpose of thermobonding of the binding agent, and application of pressure to the non-woven simultaneously or staggered in time, and
u) separation of the bonded non-woven into insulating material mats,
wherein the insulating material mats have a density in the region of 20 to 120 kg/m³.

2. A method for the preparation of insulating material mats, comprising
a) the provision of first ground plant matter containing plant fibres and shives, wherein the plant fibres and shives are connected to one another at least in parts,
b) provision of at least one binding agent, in particular binding fibre,
d) preparation of a first layer of material from the first ground plant matter containing plant fibres and shives in a first feed device,
g) blending of the first ground plant matter containing plant fibres and shives with the at least one binding agent, in particular the at least one binding fibre, in particular in the air stream,
h) if necessary, separation of dust and/or foreign particles from the mixture obtained according to step g),
i) if necessary, intermediate storage of the mixture obtained according to step g) or h),
j) discharge of the mixture onto a conveyor belt, forming a fibrous web,
l) formation of a pre-web by means of at least one first non-woven former, in particular equipped with needles or pins, and/or by means of at least one non-woven disperser, in particular comprising or consisting of at least one pin roll, wherein the mixture is preferably fed by means of a first transport unit to the non-woven former or non-woven disperser,
n) if necessary, in addition to step g), supplying of the pre-web, in particular strewing of the pre-web, with at least one particular binding agent,
o) formation of a non-woven from the pre-web according to step l) or n) by means of a second non-woven former, containing a drum, equipped with a saw-tooth wire, wherein the pre-web is fed by means of a second transport unit, containing at least one pair of rollers consisting of an upper and a lower roller or containing an upper roller and a feed table, to the drum,
r) activation of the binding agent, in particular treatment of the non-woven obtained according to step o) with heat for the purpose of thermobonding of the binding agent, and application of pressure to the non-woven simultaneously or staggered in time, and
u) separation of the bonded non-woven into insulating material mats.

3. The method according to Claim 1 or 2, further comprising
c) provision of a second ground plant matter containing plant fibres, which has a reduced proportion of shives or is substantially free of shives, and/or which differs from the first ground plant matter in a property other than the shive proportion,
e) preparation of at least one further, second layer of material from the second ground plant matter containing plant fibres, which has a reduced proportion of shives or is substantially free of shives, and/or from a second ground plant matter, which differs from the first ground plant matter in a property other than the shive proportion, in a further, second feed device,
f) addition of at least one flame retardant to the second layer of material, in particular application of an aqueous system, containing at least one flame retardant, to the layer of material of the upper side, and
g) blending of the first ground plant matter containing plant fibres and shives with the at least one binding agent and with the second ground plant matter containing plant fibres, which has a reduced proportion of shives or is substantially free of shives, and/or which differs from the first ground plant matter in a property other than the shive proportion.

4. The method according to Claim 3, **characterised in that**
in step g) the first ground plant matter containing plant fibres and shives is blended with the at least one binding agent in the form of binding fibres and with the second ground plant matter containing plant fibres, which has a reduced proportion of shives or is substantially free of shives and/or which differs from the first ground plant matter in a property other than the shive proportion, in the air stream.

5. The method according to any one of the preceding claims, further comprising
k) treatment of the fibrous web with at least one flame retardant, in particular application of an aqueous system, containing at least one flame retardant, to the fibrous web of the upper side, and/or
m) treatment of the pre-web with at least one flame retardant, in particular application of an aqueous system, containing at least one flame retardant, to the pre-web of the upper side, and/or
p) treatment of said non-woven with at least one flame retardant, in particular application of an aqueous system, containing at least one flame retardant, to the non-woven of the upper side.

6. The method according to any one of the preceding claims, further comprising
q) application of water vapour to the non-woven, in particular if a particular binding agent, preferably in powder form, is added in step n), and/or
r) activation of the binding agent by treatment of the non-woven obtained according to step o), p) or q) with heat for the purpose of thermobonding of the binding agent, in particular of the binding fibres, and application of pressure to the non-woven simultaneously or staggered in time,
s) if necessary, calendering of the non-woven obtained according to step q) or r), and
t) if heat treatment has taken place in step q), r) and/or s), cooling down of the non-woven bonded according to step q, r) and/or s) and, if necessary, application of pressure.

7. The method according to any one of the preceding claims, **characterised in that** the first non-woven former is an aerodynamic non-woven former, containing at least one needle roller or a drum, and/or that the second non-woven former is an aerodynamic non-woven former, containing at least one drum.

8. The method according to any one of the preceding claims, **characterised in that** the particular binding agent is available in the form of powder, granular material or fibres or any mixture hereof.

9. The method according to any one of the preceding claims, **characterised in that** the separation of dust and/or foreign particles from the mixture obtained according to step g) is carried out by means of at least one cyclone separator and/or condenser, in particular a cell wheel condenser.

10. The method according to any one of the preceding claims, **characterised in that** the first transport unit contains at least one pair of rollers consisting of an upper and a lower roller.

11. The method according to any one of Claims 3 to 9, **characterised in that** the second ground plant matter, in particular hemp plant matter, is based on initial plant matter having a higher degree of retting than the initial plant matter for the first ground plant matter, and/or **in that** the average, in particular the absolute, length of the fibres of the second ground plant matter, in particular hemp plant matter, is shorter than the average, in particular absolute, length of the fibres of the first ground plant matter, and/or **in that** the second ground plant matter, in particular hemp plant matter, has a lower proportion of shives than the first ground plant matter.

12. The method according to any one of Claims 3 to 11, **characterised in that** the second ground plant matter, in particular hemp plant matter, is based on an initial plant matter having a degree of retting in the region of 7 to 9, and/or **in that** the second ground plant matter, in particular hemp plant matter, has a shive proportion less than 20 wt.%, in particular less than 15 wt.%, and, particularly preferably, less than 10 wt.%, each based on the total weight of the second ground plant matter, and/or that the average length, in particular the absolute, length of the fibres of the second ground plant matter, in particular hemp plant matter, lies in the region of 5 mm to 30 mm, in particular in the region of 7 mm to 25 mm and, particularly preferably, in the region of 10 mm to 20 mm, and/or that the second ground plant matter is based on flax straw and/or flax straw fibres as the initial plant matter, wherein the degree of retting is based on the following scale: 1 = not retted and 9 = retting completed,
where 1 - 3 = olive green to light green, 4 - 6 = light blond to beige with fungal growth beginning, 7 - 9 = ochre brown to dark brown with increasing fungal growth (in accordance with the IfPP (Information for Plant Production) issue 7/1998, *"Untersuchungen zu pflanzenbaulichen, erntetechnischen and okonomischen Fragen des Anbaus von Faser- and Körnerhanf"* ["Investigations of the Issues relating to Plant Cultivation, Harvesting Technology and the Economics of Growing Hemp for Fibre and Grains"], Forchheim State Institute of Plant Cultivation, ISSN 0937 - 6712, 7/1998).

13. The method according to any one of the preceding claims, **characterised in that** the first and/or second feed station comprises a weighing module, a device for loosening the first and/or second ground plant matter and/or a device for applying at least one flame retardant to the first and/or second ground plant matter, in particular a device for spraying the ground plant matter with an aqueous system, containing at least one flame retardant.

14. The method according to any one of the preceding claims, **characterised in that** at least one flame retardant, in particular an aqueous system, containing at least one flame retardant, is applied to the fibrous web and/or the pre-web and/or the non-woven.

15. The method according to any one of the preceding claims, **characterised in that** the first and/or second non-woven former comprises a screening drum, to which a negative pressure is or can be applied in order to separate dust particles.

16. The method according to any one of the preceding claims, **characterised in that** the first ground plant matter is based on initial plant matter selected from the group consisting of hemp, jute, nettle, flax, kenaf, ramie and miscanthus or any mixtures hereof, and/or that the second ground plant matter is based on initial plant matter selected from the group consisting of hemp, jute, nettle, flax, kenaf, ramie, miscanthus, rapeseed, cereal straw, sisal, bulrush and reeds or any mixtures hereof.

17. The method according to any one of the preceding claims, **characterised in that** the plant fibres of the first and/or second ground plant matter are selected from the group consisting of hemp, flax, jute, sisal, rapeseed, coconut, kenaf, nettle, ramie, miscanthus, cereal straw, bulrush and reed fibres or mixtures hereof, and/or that the shives are selected from the group consisting of hemp, flax, jute, kenaf, nettle, ramie and miscanthus shives or any mixtures hereof.

18. The method according to any one of the preceding claims, **characterised in that** the binding fibres constitute thermoplastic mono- or multi-component fibres, in particular bi-component fibres.

19. The method according to any one of the preceding claims, **characterised in that** the first ground plant matter containing plant fibres and shives mainly have plant fibres and/or shives having an average length, in particular absolute length, in the region of 2 to 15 cm, in particular in the region of 3 to 12 cm and, particularly preferably, in the region of 4 to 10 cm.

20. The method according to any one of the preceding claims, **characterised in that** the plant stems forming the basis of the first ground plant matter containing plant fibres and shives had an average thickness, preferably maximum thickness, up to 5 cm, preferably up to 4.5 cm and, particularly preferably, in the region of 0.2 cm to 3.5 cm.

21. The method according to any one of the preceding claims, **characterised in that** the flame retardant comprises nitrogen-containing phosphates, in particular ammonium, melamine and/or guanidine phosphates, aluminium phosphates, borates, in particular ammonium, melamine, guanidine, potassium or sodium borates, boric acid, boron phosphoric acid esters, pre-oxidised viscose fibres, pre-oxidized polyacrylonitrile fibres, carbon fibres, rice husks or any mixtures thereof.

22. The method according to any one of the preceding claims, **characterised in that** the first ground plant matter has a fibre proportion in the region of 10 to 90 wt.%, in particular in the region of 20 to 60 wt.% and, particularly preferably, in the region of 40 to 60 wt.%, and/or a shive proportion in the region of 10 to 60 wt.%, in particular in the region of 20 to 60 wt.% and, particularly preferably, in the region of 20 to 45 wt.%.

23. An insulating material mat, obtained by the method according to any one of the preceding claims, in particular an external building insulating mat or internal building insulating mat, **characterised by** a density in the region of 20 to 120 kg/m³.

24. The insulating material mat according to Claim 23, **characterised in that** said insulating material mat constitutes a hemp insulating material mat, containing hemp fibres and hemp shives.

## Revendications

1. Procédé de fabrication de panneaux isolants, comprenant
a) la mise à disposition d'un premier matériau végétal broyé contenant des fibres végétales et des anas, les fibres végétales et les anas étant liés au moins partiellement entre eux,
b) la mise à disposition d'au moins un liant, en particulier une fibre liante,
d) la fabrication d'une première couche de matériau à partir du premier matériau végétal broyé contenant des fibres végétales et des anas dans un premier dispositif d'amenée,
g) le mélange du premier matériau végétal broyé contenant des fibres végétales et des anas avec ledit au moins un liant, en particulier ladite au moins une fibre liante, en particulier dans un flux d'air,
h) le cas échéant, la séparation de particules de poussière et/ou de particules étrangères du mélange obtenu en étape g),
i) le cas échéant, le stockage provisoire du mélange obtenu selon l'étape g) ou h),
j) le déversement du mélange sur une bande transporteuse en formant un voile de carde,
l) la formation d'une première couche de fibres au moyen d'au moins un premier formateur de non-tissé, pourvu en particulier d'aiguilles ou de poinçons, et/ou au moyen d'au moins un disperseur de non-tissé, en particulier comprenant, ou constitué d'au moins un cylindre à picots, le mélange étant préférentiellement amené au formateur de non-tissé ou au disperseur de non-tissé par une première unité de transport,
n) le cas échéant, de manière complémentaire à l'étape g), l'application d'au moins un liant particulaire sur la première couche de fibres, en particulier la dispersion de la première couche de fibres,
o) la formation d'un non-tissé à partir de la première couche de fibres selon l'étape l) ou n) au moyen d'un deuxième formateur de non-tissé, comprenant un tambour, en particulier pourvu d'un fil métallique en dents de scie, la première couche de fibres étant amenée au tambour par une deuxième unité de transport, comprenant au moins une paire de cylindres constituée d'un cylindre supérieur et d'un cylindre inférieur ou comprenant un cylindre supérieur et une table d'amenée,
r) l'activation du liant, en particulier le traitement du non-tissé obtenu selon l'étape o) par chaleur aux fins de collage thermique du liant, et l'application de pression simultanée ou temporellement décalée sur le non-tissé, et
u) la division du non-tissé solidifié en panneaux isolants,
lesdits panneaux isolants ayant une densité comprise entre 20 et 120 kg/m³.

2. Procédé de fabrication de panneaux isolants, comprenant
a) la mise à disposition d'un premier matériau végétal broyé contenant des fibres végétales et des anas, les fibres végétales et les anas étant liés au moins partiellement entre eux,
b) la mise à disposition d'au moins un liant, en particulier une fibre liante,
d) la fabrication d'une première couche de matériau à partir du premier matériau végétal broyé contenant des fibres végétales et des anas dans un premier dispositif d'amenée,
g) le mélange du premier matériau végétal broyé contenant des fibres végétales et des anas avec ledit au moins un liant, en particulier ladite au moins une fibre liante, en particulier dans un flux d'air,
h) le cas échéant, la séparation de particules de poussière et/ou de particules étrangères du mélange obtenu en étape g),
i) le cas échéant, le stockage provisoire du mélange obtenu selon l'étape g) ou h),
j) le déversement du mélange sur une bande transporteuse en formant un voile de carde,
l) la formation d'une première couche de fibres au moyen d'au moins un premier formateur de non-tissé, pourvu en particulier d'aiguilles ou de poinçons, et/ou au moyen d'au moins un disperseur de non-tissé, en particulier comprenant, ou constitué d'au moins un cylindre à picots, le mélange étant préférentiellement amené au formateur de non-tissé ou au disperseur de non-tissé par une première unité de transport,
n) le cas échéant, de manière complémentaire à l'étape g), l'application d'au moins un liant particulaire sur la première couche de fibres, en particulier la dispersion de la première couche de fibres,
o) la formation d'un non-tissé à partir de la première couche de fibres selon l'étape l) ou n) au moyen d'un deuxième formateur de non-tissé, comprenant un tambour, en particulier pourvu d'un fil métallique en dents de scie, la première couche de fibres étant amenée au tambour par une deuxième unité de transport, comprenant au moins une paire de cylindres constituée d'un cylindre supérieur et d'un cylindre inférieur ou comprenant un cylindre supérieur et une table d'amenée,
r) l'activation du liant, en particulier le traitement du non-tissé obtenu selon l'étape o) par chaleur aux fins de collage thermique du liant, et l'application de pression simultanée ou temporellement décalée sur le non-tissé, et
u) la division du non-tissé solidifié en panneaux isolants.

3. Procédé selon la revendication 1 ou la revendication 2, comprenant en outre
c) la mise à disposition d'un deuxième matériau végétal broyé contenant des fibres végétales, présentant une part réduite d'anas, ou sensiblement exempt d'anas, et/ou se distinguant du premier matériau végétal broyé par une autre propriété que la part d'anas,
e) la fabrication d'au moins une autre deuxième couche de matériau à partir du deuxième matériau végétal broyé contenant des fibres végétales, présentant une part réduite d'anas, ou sensiblement exempt d'anas, et/ou à partir d'un deuxième matériau végétal broyé, se distinguant du premier matériau végétal broyé par une autre propriété que la part d'anas, dans un autre deuxième dispositif d'amenée,
f) l'ajout d'au moins un agent ignifugeant à la deuxième couche de matériau, en particulier l'application d'un système aqueux contenant au moins un agent ignifugeant sur la face supérieure de la couche de matériau, et
g) le mélange du premier matériau végétal broyé contenant des fibres végétales et des anas avec ledit au moins un liant et avec le deuxième matériau végétal broyé contenant des fibres végétales, présentant une part réduite d'anas, ou sensiblement exempt d'anas et/ou se distinguant du premier matériau végétal broyé par une autre propriété que la part d'anas.

4. Procédé selon la revendication 3, **caractérisé**
**en ce qu'**en étape g), le premier matériau végétal broyé contenant des fibres végétales et des anas est mélangé dans un flux d'air avec ledit au moins un liant sous forme de fibres liantes et avec le deuxième matériau végétal broyé contenant des fibres végétales, présentant une part réduite d'anas, ou sensiblement exempt d'anas et/ou se distinguant du premier matériau végétal broyé par une autre propriété que la part d'anas.

5. Procédé selon l'une des revendications précédentes, comprenant en outre
k) le traitement du voile de carde avec au moins un agent ignifugeant, en particulier l'application d'un système aqueux contenant au moins un agent ignifugeant sur la face supérieure du voile de carde, et/ou
m) le traitement de la première couche de fibres avec au moins un agent ignifugeant, en particulier l'application d'un système aqueux contenant au moins un agent ignifugeant sur la face supérieure de la première couche de fibres, et/ou
p) le traitement dudit non-tissé avec au moins un agent ignifugeant, en particulier l'application d'un système aqueux contenant au moins un agent ignifugeant sur la face supérieure du non-tissé.

6. Procédé selon l'une des revendications précédentes, comprenant en outre
q) l'application de vapeur d'eau sur le non-tissé, en particulier si un liant particulaire est ajouté préférentiellement sous forme de poudre en étape n), et/ou
r) l'activation du liant par traitement du non-tissé obtenu selon l'étape o), p) ou q) par chaleur aux fins de collage thermique du liant, en particulier des fibres liantes, et l'application de pression simultanée ou temporellement décalée sur le non-tissé, et
s) le cas échéant, le calandrage du non-tissé obtenu selon l'étape q) ou r), et
t) si un traitement thermique a été effectué en étape q), r) et/ou s), le refroidissement du non-tissé solidifié selon l'étape q, r) et/ou s), et le cas échéant application de pression.

7. Procédé selon l'une quelconque des revendications précédentes, **caractérisé en ce que** le premier formateur de non-tissé est un formateur aérodynamique de non-tissé, comprenant au moins un rouleau à aiguilles ou un tambour, et/ou **en ce que** le deuxième formateur de non-tissé est un formateur aérodynamique de non-tissé, comprenant au moins un tambour.

8. Procédé selon l'une quelconque des revendications précédentes, **caractérisé en ce que** le liant particulaire se présente sous la forme de poudre, de granulés ou de fibres, ou d'un mélange quelconque de ceux-ci.

9. Procédé selon l'une quelconque des revendications précédentes, **caractérisé en ce que** la séparation de particules de poussière et/ou de particules étrangères du mélange obtenu en étape g) est effectuée au moyen d'au moins un séparateur à cyclone et/ou d'un condenseur, en particulier d'un condenseur à roue cellulaire.

10. Procédé selon l'une quelconque des revendications précédentes, **caractérisé en ce que** la première unité de transport comprend au moins une paire de cylindres constituée d'un cylindre supérieur et d'un cylindre inférieur.

11. Procédé selon l'une des revendications 3 bis 9, **caractérisé en ce que** le deuxième matériau végétal broyé, en particulier un matériau de chanvre, est basé sur un matériau végétal initial dont le degré de torréfaction est supérieur à celui du matériau végétal initial pour le premier matériau végétal broyé et/ou **en ce que** la longueur moyenne, en particulier la longueur absolue des fibres du deuxième matériau végétal broyé, en particulier un matériau de chanvre, est inférieure à la longueur moyenne, en particulier la longueur absolue des fibres du premier matériau végétal broyé et/ou **en ce que** le deuxième matériau végétal broyé, en particulier un matériau de chanvre, présente une part d'anas inférieure à celle du premier matériau végétal broyé.

12. Procédé selon l'une des revendications 3 bis 11, **caractérisé en ce que** le deuxième matériau végétal broyé, en particulier un matériau de chanvre, est basé sur un matériau végétal initial dont le degré de torréfaction est compris entre 7 et 9 et/ou **en ce que** le deuxième matériau végétal broyé, en particulier un matériau de chanvre, présente une part d'anas inférieure à 20 % en poids, en particulier inférieure à 15 % en poids, et tout particulièrement inférieure à 10 % en poids, par rapport au poids total du deuxième matériau végétal broyé, et/ou **en ce que** la longueur moyenne, en particulier la longueur absolue des fibres du deuxième matériau végétal broyé, en particulier un matériau de chanvre, est comprise entre 5 mm et 30 mm, en particulier entre 7 mm et 25 mm et tout particulièrement entre 10 mm et 20 mm et/ou **en ce que** le deuxième matériau végétal broyé est basé sur de la paille et/ou des fibres de lin en tant que matériau végétal initial, l'échelle suivante décrivant le degré de torréfaction : 1 = non torréfié et 9 = torréfaction terminée, avec 1 - 3 = vert olive à vert clair, 4 - 6 = bond clair à beige avec apparition fongique, 7 - 9 = ocre à marron foncé avec développement fongique (suivant IfPP (Informationen für die Pflanzenproduktion) n°7/1998, " Untersuchungen zu pflanzenbaulichen emtetechnischen und ökonomischen Fragen des Anbaus von Faser- und Körnerhanf [Etudes sur la culture, la récolte et l'économie des fibres et graines de chanvre]", Landesanstalt für Pflanzenbau Forchheim, ISSN 0937 - 6712, 7/1998).

13. Procédé selon l'une quelconque des revendications précédentes, **caractérisé en ce que** la première et/ou la deuxième station d'amenée comprend un module de pesée, un dispositif pour l'aération du premier et/ou deuxième matériau végétal broyé et/ou un dispositif pour l'application d'au moins un agent ignifugeant sur le premier et/ou le deuxième matériau végétal broyé, en particulier un dispositif pour l'aspersion d'un système aqueux contenant au moins un agent ignifugeant sur le matériau végétal broyé.

14. Procédé selon l'une quelconque des revendications précédentes, **caractérisé en ce qu'**au moins un agent ignifugeant, en particulier un système aqueux contenant au moins un agent ignifugeant est appliqué sur le voile de carde et/ou la première couche de fibres et/ou le non-tissé.

15. Procédé selon l'une quelconque des revendications précédentes, **caractérisé en ce que** le premier et/ou le deuxième formateur de non-tissé comprend un tambour de tamisage soumis ou pouvant être soumis à dépression pour la séparation de particules de poussière.

16. Procédé selon l'une quelconque des revendications précédentes, **caractérisé en ce que** le premier matériau végétal broyé est basé sur un matériau végétal initial sélectionné dans le groupe comprenant chanvre, jute, ortie, lin, kenaf, ramie et miscanthus ou des mélanges quelconques de ceux-ci et/ou **en ce que** le deuxième matériau végétal broyé est basé sur un matériau végétal initial sélectionné dans le groupe comprenant chanvre, jute, ortie, lin, kenaf, ramie, miscanthus, colza, paille de céréales, sisal, massette et roseau ou des mélanges quelconques de ceux-ci.

17. Procédé selon l'une quelconque des revendications précédentes, **caractérisé en ce que** les fibres végétales du premier et/ou du deuxième matériau végétal broyé sont sélectionnées dans le groupe comprenant : fibres de chanvre, de lin, de jute, de sisal, de colza, de coco, de kenaf, d'ortie, de ramie, de miscanthus, de paille de céréales, de massette et de roseau ou de mélanges de ceux-ci et/ou **en ce que** les anas sont sélectionnés dans le groupe comprenant des anas de chanvre, de lin, de jute, de kenaf, d'ortie, de ramie et de miscanthus ou de mélanges quelconques de ceux-ci.

18. Procédé selon l'une quelconque des revendications précédentes, **caractérisé en ce que** les fibres liantes représentent des fibres thermoplastiques mono- ou multicomposées, en particulier des fibres bicomposées.

19. Procédé selon l'une quelconque des revendications précédentes, **caractérisé en ce que** le premier matériau végétal broyé contenant des fibres végétales et des anas présente principalement des fibres végétales et/ou des anas ayant une longueur moyenne, en particulier une longueur absolue, comprise entre 2 et 15 cm, en particulier entre 3 et 12 cm et préférentiellement entre 4 et 10 cm.

20. Procédé selon l'une quelconque des revendications précédentes, **caractérisé en ce que** les tiges végétales à la base du premier matériau végétal broyé contenant des fibres végétales et des anas présentaient une épaisseur moyenne, préférentiellement une épaisseur maximale jusqu'à 5 cm, préférentiellement jusqu'à 4,5 cm et tout particulièrement comprise entre 0,2 cm et 3,5 cm.

21. Procédé selon l'une quelconque des revendications précédentes, **caractérisé en ce que** l'agent ignifugeant comprend des phosphates azotés, en particulier des phosphates d'ammonium, de mélamine et/ou de guanidine, d'aluminium, des borates, en particulier des borates d'ammonium, de mélamine, de guanidine, de potassium ou de sodium, de l'acide borique, des esters d'acide phosphorique et borique, des fibres de viscose pré-oxydées, des fibres de polyacrylonitrile pré-oxydées, des fibres de carbone, de la paille de riz ou des mélanges quelconques de ceux-ci.

22. Procédé selon l'une quelconque des revendications précédentes, **caractérisé en ce que** le premier matériau végétal broyé présente une teneur en fibres comprise entre 10 et 90 % en poids, en particulier entre 20 et 60 % en poids et préférentiellement entre 40 et 60 % en poids, et/ou une teneur en anas comprise entre 10 et 60 % en poids, en particulier entre 20 et 60 % en poids et préférentiellement entre 20 et 45 % en poids.

23. Panneau isolant, disponible suivant le procédé selon l'une quelconque des revendications précédentes, en particulier panneau isolant extérieur de bâtiment ou panneau isolant intérieur de bâtiment, **caractérisé par** une densité comprise entre 20 et 120 kg/m³.

24. Panneau isolant selon la revendication 23, **caractérisé en ce qu'**il constitue un panneau isolant de chanvre, contenant des fibres de chanvre et des anas de chanvre.
